Europäisches Patentamt

European Patent Office

Office européen des brevets

(11) Veröffentlichungsnummer: **0 171 706**
A2

# (12) EUROPÄISCHE PATENTANMELDUNG

(21) Anmeldenummer: 85109631.3

(22) Anmeldetag: 31.07.85

(51) Int. Cl.⁴: **F 16 F 3/08**
F 16 F 1/36, B 61 G 11/08

(30) Priorität: 16.08.84 DE 3430122

(43) Veröffentlichungstag der Anmeldung:
19.02.86 Patentblatt 86/8

(84) Benannte Vertragsstaaten:
AT BE CH DE FR GB IT LI NL SE

(71) Anmelder: Ringfeder G.m.b.H.
Duisburger Strasse 145
D-4150 Krefeld-Uerdingen(DE)

(72) Erfinder: Mühlhahn, Dieter
Talstrasse 144
D-4018 Langenfeld(DE)

(72) Erfinder: Marsella, Gino
Kranichstrasse 7
D-4040 Neuss(DE)

(72) Erfinder: Detzner, Friedhelm
An den Wieen 37
D-4100 Duisburg 46(DE)

(72) Erfinder: Simons, Dieter
Rather Strasse 5B
D-4150 Krefeld 1(DE)

(72) Erfinder: Schäfer, Horst-Dieter
Süchtelner Strasse 149
D-4156 Willich 2(DE)

(72) Erfinder: Haarkötter, Hermann
Philipp-Reis-Strasse 24
D-4150 Krefeld 1(DE)

(54) **Federelement aus Kunststoff.**

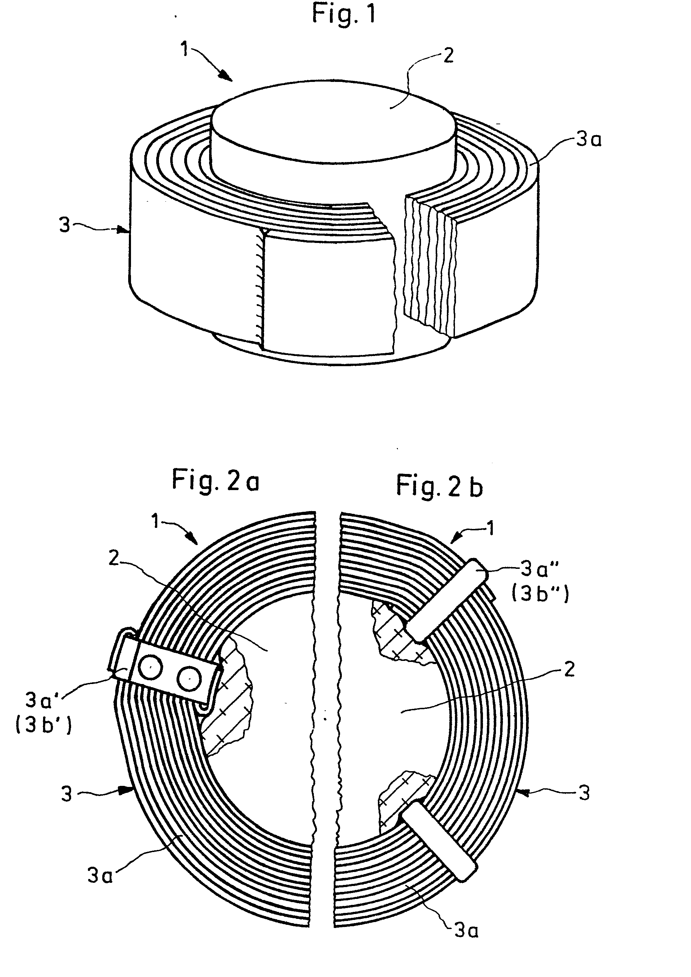

(57) Um eine Federelement aus Kunststoff zu schaffen, das bei möglichst kompakten Abmessungen und geringem Gewicht ein hohes und weitgehend konstantes Arbeitsvermögen aufweist, ist das Federelement aus einem inneren, durch die auftretenden Axialkräfte beaufschlagbaren und als hydrostatischer Druckübersetzer wirksamen Kern (2) und einem diesen Kern (2) umschließenden Federkörper (3) gebildet, der die aus den Axialkräften resultierenden Radialkräfte elastisch aufnimmt, wobei dieser Federkörper (3) aus verstrecktem Kunststoff (z.B. kopolymeren Polyester-Elastomeren, aromatischen Polyamiden) besteht (Fig 1).

Fig. 1

Croydon Printing Company Ltd.

RINGFEDER GMBH                                    M. 1118
4150 Krefeld-Uerdingen


Federelement aus Kunststoff

Die Erfindung betrifft ein Federelement aus Kunststoff, insbesondere für Puffer und Zug- und Stoßvorrichtungen von
Schienenfahrzeugen.

Der Erfindung liegt die Aufgabe zugrunde, ein Federelement
aus Kunststoff zu schaffen, das bei möglichst kompakten Abmessungen und geringem Gewicht ein hohen statischen und dynamischen Druckbelastungen entsprechendes Arbeitsvermögen
aufweisen und im Hinblick auf ein Gleichbleiben dieses Arbeitsvermögens weitgehend frei von Verschleiß- und Setzerscheinungen sein soll.

Diese Aufgabe wird erfindungsgemäß dadurch gelöst, daß das
Federelement aus einem inneren, durch die auftretenden
Axialkräfte beaufschlagbaren und als hydrostatischer Druckübersetzer wirksamen Kern und einem diesen Kern umschliessenden, die aus den Axialkräften resultierenden Radialkräfte elastisch aufnehmenden Federkörper gebildet ist, wobei
dieser Federkörper aus verstrecktem Kunststoff (z.B. kopolymeren Polyester-Elastomeren, aromatischen Polyamiden) besteht.

- 2 -    0171706

Bei verstreckbaren Kunststoffen ist ein zwischen zwei elastischen Bereichen liegender, relativ weiter Fließbereich charakteristisch. Dieser Fließbereich wird durch das Verstrecken (gemäß US-PS 4 076 226 über Dehnung eines Gurtes aus Polyester-Elastomer um 300-400 % seiner Ausgangslänge) unter Aufbau eines Eigenspannungszustandes ausgeschaltet; der bei dem erfindungsgemäßen Federelement vorgesehene Federkörper aus verstrecktem Kunststoff arbeitet rein proportional, entsprechend dem Hooke'schen Gesetz.

Die mit der Erfindung erzielbaren Vorteile bestehen insbesondere in folgendem:
In allen Anwendungsfällen dieses Federelementes, ob nun bei Puffern und Zug- und Stoßvorrichtungen von Schienenfahrzeugen, im Kran- und allgemeinen Maschinenbau, sind dessen kompakte Abmessungen, geringes Gewicht und hohe Federkapazität für die Auslegung, z.B. die Baulänge der mit solchen Elementen ausgerüsteten Gegenstände, günstig. Da das Federelement gegenüber Umwelteinflüssen weitestgehend unempfindlich ist und praktisch verschleiß- und setzungsfrei arbeitet, sind spezielle Maßnahmen zur Abschirmung des Federelementes, beispielsweise Gehäuse mit aufwendiger Abdichtung, und besondere Wartungsarbeiten entbehrlich.

Ausführungsbeispiele der Erfindung sind in der Zeichnung schematisch dargestellt und werden im folgenden näher beschrieben. Die Figuren 1 bis 8b zeigen jeweils unterschiedlich gestaltete Federelemente als Einzelteile. Die Figuren 9a bis 13 zeigen aus solchen Federelementen gebildete Federsäulen und deren Führung innerhalb eines Gehäuses (Fig. 9a bis 10b) oder an einer Halterung (Fig. 11a bis 13).

Alle hier dargestellten Federelemente 1 haben jeweils einen durch die auftretenden Axialkräfte beaufschlagbaren inneren Kern 2, beispielsweise aus Polyurethan, der im Sinne eines hydrostatischen Druckübersetzers wirksam ist. Weiter weisen die Federelemente 1 jeweils einen den Kern 2 umschließenden Federkörper 3 auf, der aus verstrecktem Kunststoff - zum Beispiel kopolymeren Polyester-Elastomeren, aromatischen Polyamiden - besteht. Der Federkörper 3 nimmt die aus den Axialkräften resultierenden Radialkräfte elastisch auf, wobei seine durch das Verstrecken umfänglich orientierten Molekülketten auf Zug beansprucht werden.

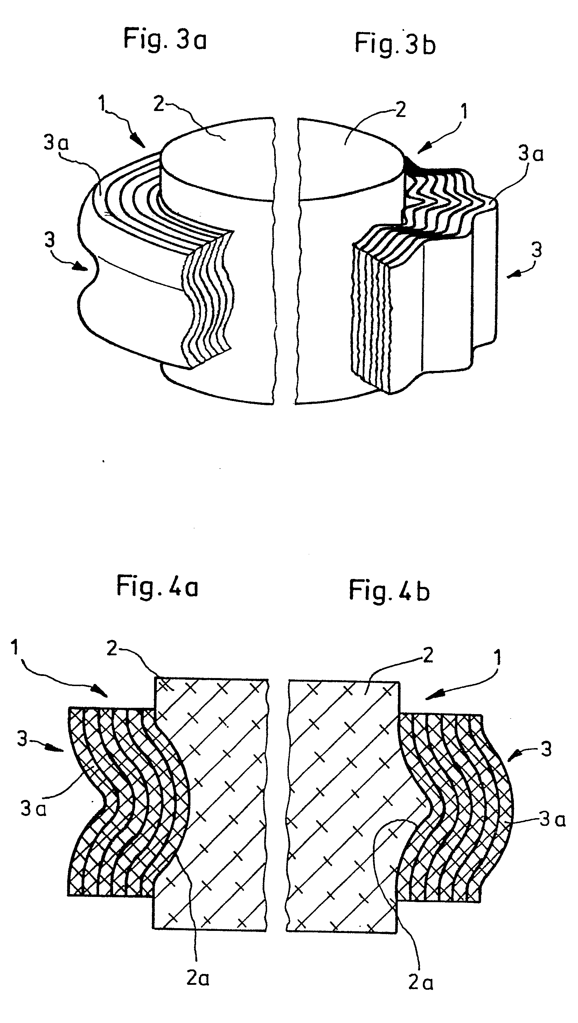

Gemäß Fig. 1 bis 4b besteht der Federkörper 3 jeweils aus einem um den Kern 2 gewickelten Band 3a aus verstrecktem Kunststoff. Das nichtkernseitige Ende dieses Bandes 3a ist an der so gebildeten Wicklung befestigt, was nach Fig. 1 durch Schweißen, nach Fig. 2a mittels einer Klammer 3a' und nach Fig. 2b über ein oder mehrere Schrumpfbänder 3a" erfolgt. Zum Verbinden der auf derartige Weise vereinigten Wicklung mit dem Kern 2 weist dieser gemäß Fig. 4a und 4b an seiner äußeren Umfangsfläche eine Halterung 2a für das im Querschnitt damit korrespondierende Band 3a auf, wobei diese Halterung 2a gemäß Fig. 4a als nutförmige Bettung und gemäß Fig. 4b als umlaufender Wulst ausgeführt ist.

Wie aus den Figuren 3a und 3b ersichtlich, kann das den Federkörper 3 bildende Band 3a in seiner Quer- bzw. Längsrichtung wellenförmig gestaltet sein. Dadurch ergibt sich für das Federelement 1 eine anfänglich flachere Federkennlinie, also ein weicheres Federungsverhalten.

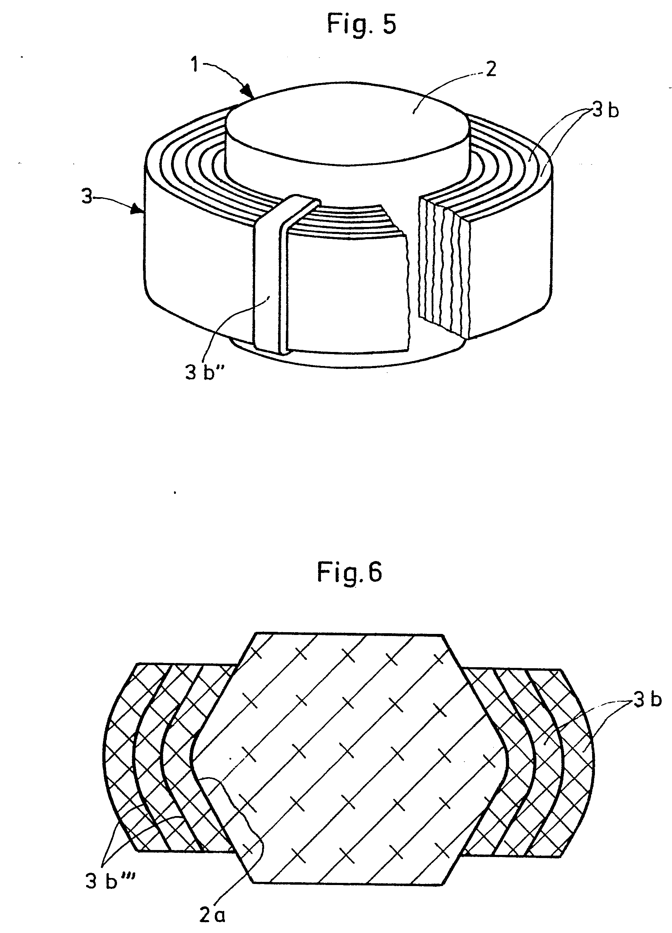

Bei den in den Figuren 5 und 6 gezeigten Federelementen 1 ist der Federkörper 3 jeweils aus ineinanderliegenden, geschlossenen Einzelringen 3b aus verstrecktem Kunststoff gebildet. Die Einzelringe 3b sind untereinander durch Schweissen oder Kleben, Klammern 3b' (siehe bei Fig. 2a), Schrumpfbänder 3b" (Fig. 5 und auch Fig. 2b) oder Wülste 3b''' (Fig.6) gehalten und gemäß Fig. 6 mit dem Kern 2 über dessen Halterung 2a (Wulst) für den kernseitigen Einzelring 3b verbunden. Hinsichtlich einer möglichen wellenförmigen Gestaltung der Einzelringe 3b wird auf Fig. 3a und 3b verwiesen.

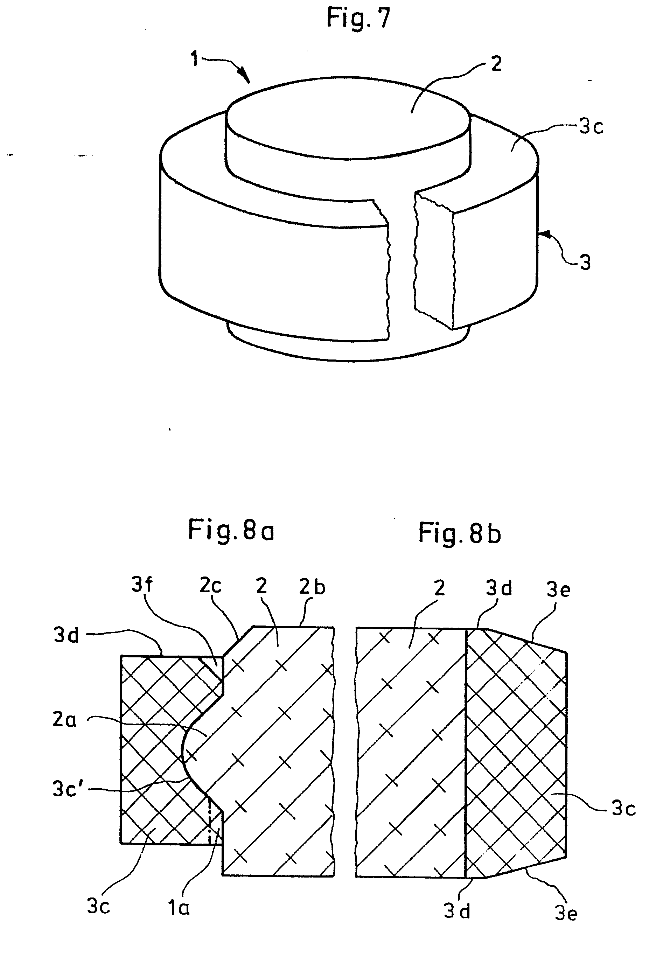

Nach den Figuren 7, 8a und 8b ist der jeweilige Federkörper 3 der Federelemente 1 aus verstrecktem Kunststoff als dickwandiger Ring 3c mit homogenem Querschnitt gestaltet. Dieser Ring 3c wird günstig unter Verstreckung seiner Molekülketten durch radiales Aufweiten, z.B. mittels Ringwalzen, geformt. Die Verbindung zwischen Kern 2 und dickwandigem Ring 3c erfolgt formschlüssig - nach Fig. 8a über die umlaufende Halterung 2a am Kern 2 und eine damit korrespondierende Bettung 3c' im Ring 3c -, stoffschlüssig - durch Kleben oder Schweißen - oder kraftschlüssig, z.B. durch Übermaß am Kern 2.

Bei allen dargestellten Federelementen 1 hat der Kern 2 eine größere Axialerstreckung als die beim Federkörper 3. Kern 2 und Federkörper 3 können aber auch mit gleicher Axialerstreckung ausgebildet sein; dabei ist es zum Beeinflussen der Federkennlinie günstig, wenn - entsprechend Fig. 8b - die beiden quer zur Längsachse des Federelementes 1 liegenden Grundflächen 3d des Federkörpers 3 nach einem Bereich gleicher Axialerstreckung mit dem Kern 2 Bereiche unterschiedlicher Axialerstreckung - hier jeweils eine quer zur Längsachse geneigte Abschrägung 3e - aufweisen.

Unter Hinweis auf Fig. 8a wird bemerkt, daß bei allen Federelementen 1 der Kern 2 und/oder der Federkörper 3 zumindest an einer der quer zur Längsachse des Federelementes 1 liegenden Grundflächen 2b, 3d mit einer umlaufenden Fase 2c, 3f versehen sein können, die das Zusammenfügen von Kern 2 und Federkörper 3 erleichtert und Verquetschungen am Kern 2 vermeidet. Fig. 8a (siehe die strichpunktierte Linie) zeigt im übrigen einen umlaufenden Freiraum 1a zwischen Kern 2 und Federkörper 3, der für ein anfänglich weicheres Verhalten des Federelementes 1 vorgesehen werden kann.

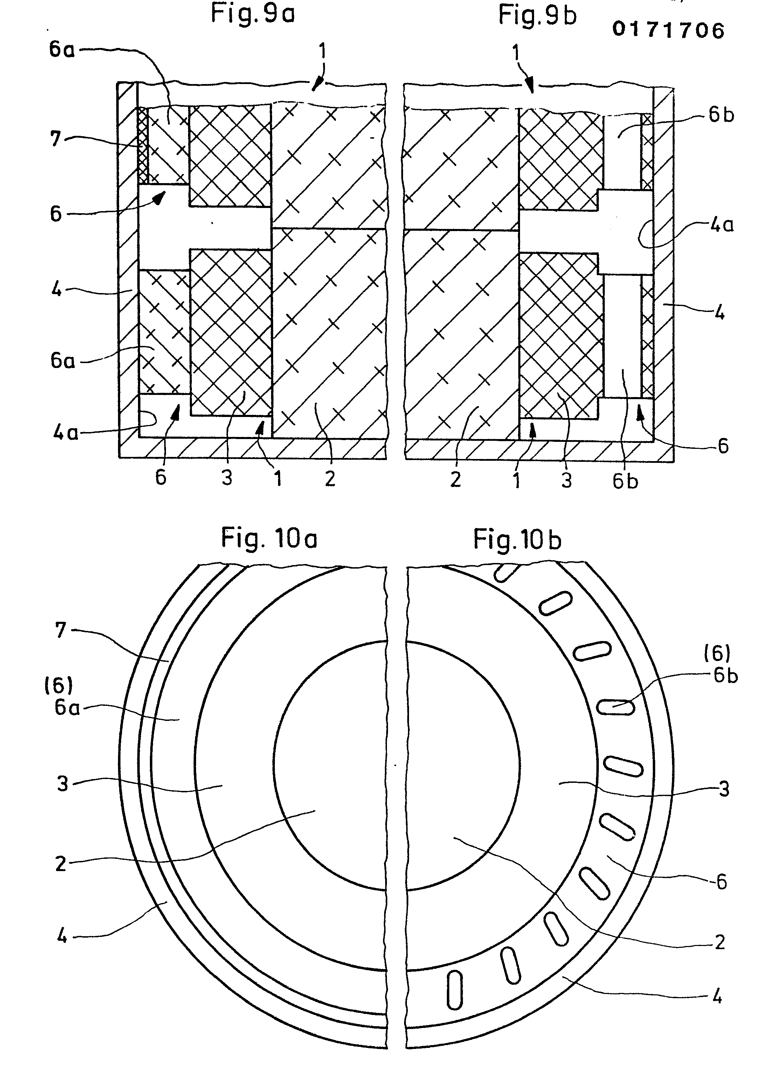

Nach den Figuren 9a bis 10b hat das jeweilige Federelement 1 zur Führung innerhalb eines Gehäuses 4 an seinem Federkörper 3 ein mit der Innenwandung 4a des Gehäuses 4 zusammenwirkendes Führungsstück 6, das im Sinne eines elastischen Ausgleiches der unter Belastung auftretenden Gestaltsänderung des Federkörpers 3 ausgelegt ist. Dazu besteht das Führungsstück 6 gemäß Fig. 9a und 10a aus einem mit dem Federkörper 3 schubfest verbundenen Ring 6a aus volumenkompressiblem Material; albernativ ist nach Fig. 9b und 10b das Führungsstück 6 an dem Federkörper 3 angeformt und mit in Längsachse des Federelementes 1 verlaufenden Ausnehmungen 6b (Langlöcher) versehen. Weiter ist das elastische Ausgleichsverhalten des Führungsstückes 6 durch seine Anordnung in einem Teilbereich der axialen Erstreckung des Federkörpers 3 beeinflußbar. Um einer Abnutzung der Führung entgegenzuwirken, kann das jeweilige Führungsstück 6 an seiner der Innenwandung 4a des Gehäuses 4 zugewandten Fläche einen Gleitring 7 aus verschleißfestem Werkstoff aufweisen, wie bei dem in Fig. 9a oberen Federelement 1 gezeigt.

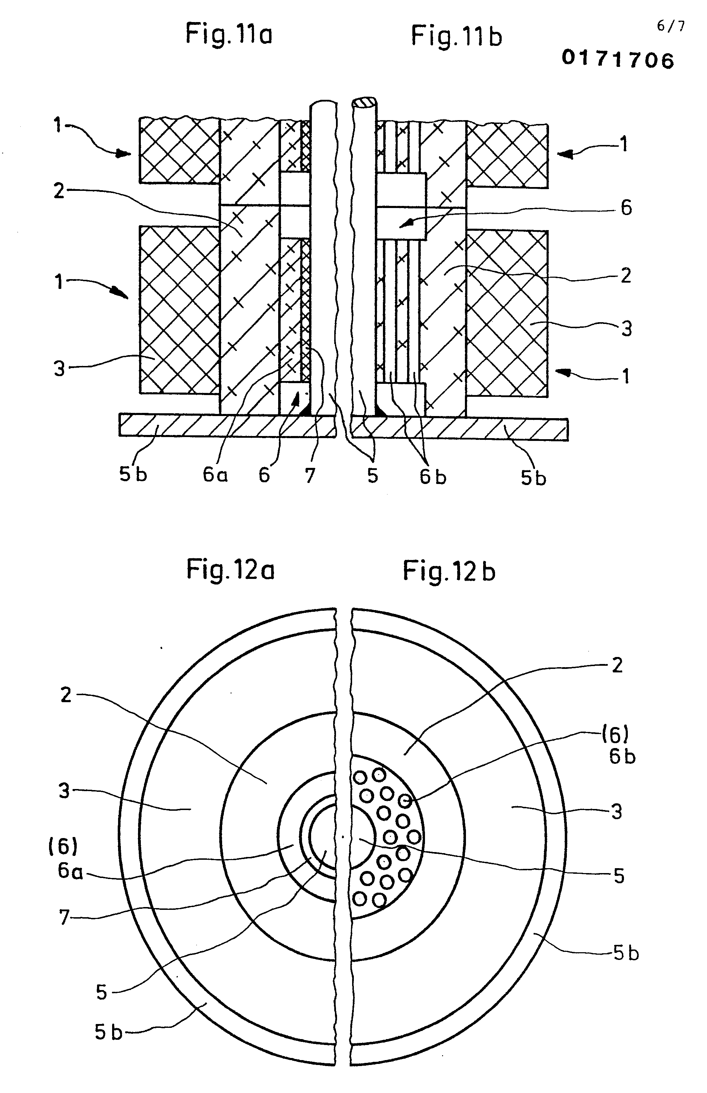

Unterschiedlich zu den Figuren 9a bis 10b erfolgt gemäß den Figuren 11a bis 12b die Führung der Federelemente 1 an einer diese in Längsrichtung durchdringenden stangenförmigen Halterung 5 mit Basisplatte 5b, wobei der jeweilige Kern 2 das mit der Umfangsfläche 5a der Halterung 5 zusammenwirkende und im Sinne eines elastischen Ausgleiches der unter Belastung auftretenden Gestaltsänderung des Kernes 2 ausgelegte Führungsstück 6 aufweist. Auch dieses Führungsstück 6 kann - wie bei den Figuren 9a bis 10b beschrieben - als separater Ring 6a ausgeführt (siehe Fig. 11a und 12a)

oder an dem Kern 2 angeformt und mit Ausnehmungen 6b versehen sein (siehe Fig. 11b und 12b). Der in Fig. 11a und 12a gezeigte, mit der Umfangsfläche 5a der Halterung 5 zusammenwirkende Gleitring 7 wirkt gleichfalls einer Abnutzung der Führung entgegen.

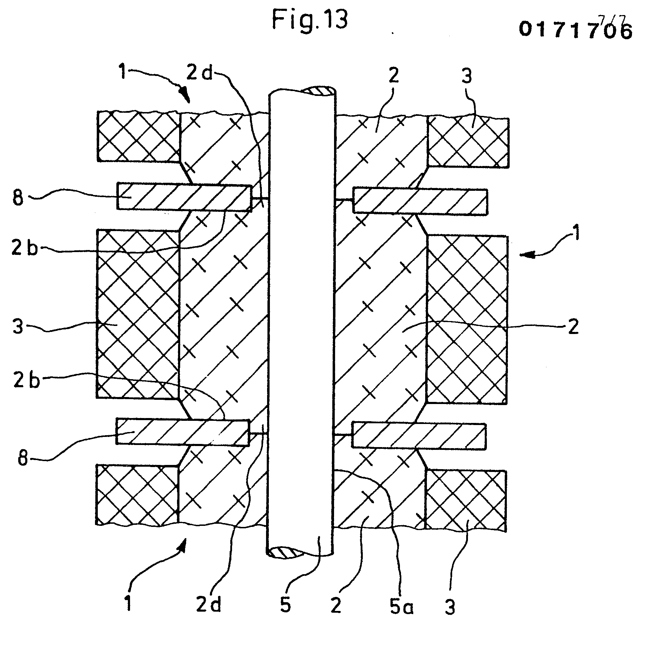

Bei allen Federelementen 1 empfiehlt es sich, den Kern 2 zwischen zwei quer zur Längsachse des Federelementes 1 liegenden Platten 8 (siehe Fig. 13) anzuordnen und über diese Platten 8 axial zu beaufschlagen, um auf diese Weise eine definierte, von der jeweiligen Anwendungssituation - z.B. der Bodenbeschaffenheit des Gehäuses 4 nach Fig. 9a und 9b oder der Beschaffenheit der Basisplatte 5a der Halterung 5 nach Fig. 11a und 11b - unabhängige Reibungsverhältnisse zwischen dem Kern 2 und den Platten 8 zu erhalten. Vorzugsweise sind die Platten 8 an ihren dem oder den Kernen 2 zugewandten Oberflächen im Sinne einer möglichst freigängigen Druckübersetzung ausgebildet, z.B. durch Trowalieren oder Beschichten.

Wie aus Fig. 13 weiter ersichtlich, erfolgt die Führung der Federelemente 1 an der diese und die Platten 8 in Längsrichtung durchdringenden stangenförmigen Halterung 5 über das unmittelbare Zusammenwirken des jeweiligen Kernes 2 mit der Umfangsfläche 5a der Halterung 5. Zum Zentrieren der Platten 8 und um bei direktem Kontakt der Platten 8 mit der Halterung 5 möglichen höheren Verschleiß zu vermeiden, weisen die Kerne 2 an ihren quer zur Längsrichtung liegenden Grundflächen 2b jeweils einen Bund 2d auf, der zwischen die entsprechende Platte 8 und die Halterung 5 eingreift.

**Patentansprüche:**

1. Federelement aus Kunststoff, insbesondere für Puffer und Zug- und Stoßvorrichtungen von Schienenfahrzeugen, dadurch gekennzeichnet, daß das Federelement (1) aus einem inneren, durch die auftretenden Axialkräfte beaufschlagbaren und als hydrostatischer Druckübersetzer wirksamen Kern (2) und einem diesen Kern (2) umschließenden, die aus den Axialkräften resultierenden Radialkräfte elastisch aufnehmenden Federkörper (3) gebildet ist, wobei dieser Federkörper (3) aus verstrecktem Kunststoff (z.B. kopolymeren Polyester-Elastomeren, aromatischen Polyamiden) besteht.

2. Federelement nach Anspruch 1, dadurch gekennzeichnet, daß der Federkörper (3) aus einem einstückigen, um den Kern (2) gewickelten Band (3a) aus verstrecktem Kunststoff besteht, wobei das nichtkernseitige Ende dieses Bandes (3a) an der so gebildeten Wicklung befestigt ist, z.B. durch Schweißen, Kleben, Klammern (3a'), Schrumpfbänder (3a'').

3. Federelement nach Anspruch 2, dadurch gekennzeichnet, daß das den Federkörper (3) bildende Band (3a) mindestens auf einer seiner Umfangsflächen wellenförmig gestaltet ist.

4. Federelement nach Anspruch 2 oder 3, dadurch gekennzeichnet, daß der Kern (2) und das darum gewickelte Band (3a) zug- und schubfest miteinander verbunden sind.

5. Federelement nach Anspruch 4, dadurch gekennzeichnet, daß der Kern (2) an seiner äußeren Umfangsfläche im Sinne einer Halterung (2a) - z.B. durch einen umlaufenden Wulst - für das um den Kern (2) gewickelte, im Querschnitt zu dieser Halterung korrespondierende Band (3a) ausgebildet ist.

6. Federelement nach Anspruch 1, dadurch gekennzeichnet, daß der Federkörper (3) aus ineinanderliegenden, geschlossenen Einzelringen (3b) aus verstrecktem Kunststoff gebildet ist.

7. Federelement nach Anspruch 6, dadurch gekennzeichnet, daß die den Federkörper (3) bildenden Einzelringe (3b) mindestens auf einer ihrer Umfangsflächen wellenförmig ausgebildet sind.

8. Federelement nach Anspruch 6 oder 7, dadurch gekennzeichnet, daß die Einzelringe (3b) untereinander gehalten sind, z.B. durch Schweißen, Kleben, Klammern (3b'), Schrumpfbänder (3b''), Wülste (3b''').

9. Federelement nach Anspruch 8, dadurch gekennzeichnet, daß der Kern (2) auf seiner äußeren Umfangsfläche im Sinne einer Halterung (2a) - z.B. durch einen umlaufenden Wulst - für den kernseitigen, im Querschnitt zu dieser Halterung korrespondierend ausgelegten Einzelring (3b) ausgebildet ist.

10. Federelement nach Anspruch 1, dadurch gekennzeichnet, daß der mit dem hydrostatisch wirksamen Kern (2) zusammenarbeitende Federkörper (3) aus verstrecktem Kunststoff als dickwandiger Ring (3c) mit homogenem Querschnitt gestaltet ist.

11. Federelement nach Anspruch 10, dadurch gekennzeichnet, daß der dickwandige Ring (3c) mit homogenem Querschnitt unter Verstreckung seiner Molekülketten durch radiales Aufweiten, z.B. durch Ringwalzen, geformt ist.

12. Federelement nach Anspruch 10 oder 11, dadurch gekennzeichnet, daß der Kern (2) und der dickwandige Ring (3c) mit homogenem Querschnitt miteinander verbunden sind.

13. Federelement nach Anspruch 12, dadurch gekennzeichnet, daß die Verbindung zwischen dem Kern (2) und dem dickwandigen Ring (3c) formschlüssig - z.B. durch eine umlaufende Halterung (2a) an dem Kern (2) und eine damit korrespondierende Bettung (3c') in dem Ring (3c) - erfolgt.

14. Federelement nach Anspruch 12, dadurch gekennzeichnet, daß die Verbindung zwischen dem Kern (2) und dem dickwandigen Ring (3c) stoffschlüssig - z.B. durch Kleben oder Schweißen - erfolgt.

15. Federelement nach Anspruch 12, dadurch gekennzeichnet, daß die Verbindung zwischen dem Kern (2) und dem dickwandigen Ring (3c) kraftschlüssig - z.B. durch Übermaß am Kern (2) - erfolgt.

16. Federelement nach einem der Ansprüche 1 bis 15, dadurch gekennzeichnet, daß der hydrostatisch wirksame Kern (2) und der Federkörper (3) mit gleicher Axialerstreckung ausgebildet sind.

17. Federelement nach Anspruch 16, dadurch gekennzeichnet, daß die beiden quer zur Längsachse des Federelementes (1) liegenden Grundflächen (3d) des Federkörpers (3) nach einem Bereich gleicher Axialerstreckung mit dem Kern (2) Bereiche unterschiedlicher Axialerstreckung - z.B. jeweils eine quer zur Längsachse geneigte Abschrägung (3e) - aufweisen.

18. Federelement nach einem der Ansprüche 1 bis 15, dadurch gekennzeichnet, daß der hydrostatisch wirksame Kern (2) eine größere Axialerstreckung als die beim Federkörper (3) aufweist.

19. Federelement nach einem der Ansprüche 1 bis 18, dadurch gekennzeichnet, daß der hydrostatisch wirksame Kern (2) und/oder der Federkörper (3) zumindest an einer der quer zur Längsachse des Federelementes (1) liegenden Grundflächen (2b; 3d) mit einer umlaufenden, geradlinig oder bogenförmig gestalteten Fase (2c; 3f) versehen ist.

20. Federelement nach einem der Ansprüche 1 bis 19, dadurch gekennzeichnet, daß zwischen dem hydrostatisch wirksamen Kern (2) und dem Federkörper (3) ein entsprechend einem anfänglich weicheren Federungsverhalten des Federelementes (1) ausgelegter Freiraum (1a) besteht.

21. Federelement nach einem der Ansprüche 1 bis 20, dadurch gekennzeichnet, daß das Federelement (1) zur Führung innerhalb eines Gehäuses (4) oder an einer das Federelement (1) in Längsrichtung durchdringenden Halterung (5) an seinem Federkörper (3) bzw. seinem Kern (2) ein mit der Innenwandung (4a) des Gehäuses (4) bzw. der Umfangsfläche (5a) der Halterung (5) zusammenwirkendes Führungsstück (6) aufweist, das im Sinne eines elastischen Ausgleiches der unter Belastung auftretenden Gestaltsänderung des Federkörpers (3) bzw. des Kernes (2) ausgelegt ist.

22. Federelement nach Anspruch 21, dadurch gekennzeichnet, daß das Führungsstück (6) aus einem mit dem Federkörper (3) oder dem Kern (2) schubfest verbundenen Ring (6a) aus volumenkompressiblem Material besteht.

23. Federelement nach Anspruch 21, dadurch gekennzeichnet, daß das Führungsstück (6) an dem Federkörper (3) oder dem Kern (2) angeformt und mit in Längsachse des Federelementes (1) verlaufenden Ausnehmungen (6b), z.B. Bohrungen oder Langlöcher, versehen ist.

24. Federelement nach einem der Ansprüche 21 bis 23, dadurch gekennzeichnet, daß das Führungsstück (6) in einem Teilbereich der axialen Erstreckung des Federkörpers (3) bzw. des Kernes (2) angeordnet ist.

25. Federelement nach einem der Ansprüche 21 bis 24, dadurch gekennzeichnet, daß das Führungsstück (6) an seiner der Innenwandung (4a) des Gehäuses (4) oder der Umfangsfläche (5a) der Halterung (5) zugewandten Fläche einen Gleitring (7) aus verschleißfestem Werkstoff aufweist.

26. Federelement nach einem der Ansprüche 1 bis 20, dadurch gekennzeichnet, daß der hydrostatisch wirksame Kern (2) zwischen zwei quer zur Längsachse des Federelementes (1) liegenden, den Kern (2) axial beaufschlagenden Platten (8) angeordnet ist.

27. Federelement nach Anspruch 26, dadurch gekennzeichnet, daß die Platten (8) jeweils eine im Sinne einer möglichst freigängigen Druckübersetzung ausgebildete, z.B. durch Trowalieren oder Beschichtung geschaffene Oberfläche aufweisen.

28. Federelement nach Anspruch 26 oder 27, dadurch gekennzeichnet, daß zur Führung des Federelementes (1) an einer das Federelement (1) und die Platten (8) in Längsrichtung durchdringenden Halterung (5) der Kern (2) unmittelbar mit der Umfangsfläche (5a) der Halterung (5) zusammenwirkt und an seinen beiden quer zur Längsrichtung liegenden Grundflächen (2b) jeweils einen zwischen die entsprechende Platte (8) und die Halterung (5) eingreifenden Bund (2d) aufweist.

Fig. 1

Fig. 2 a

Fig. 2 b

feder GmbH

M. 1118

0171706

Fig. 3a

Fig. 3b

Fig. 4a

Fig. 4b

der GmbH

Fig. 5

1  2  3 b

3

3 b"

Fig. 6

3 b

3 b'''

2a

Fig. 7

1    2    3c

3

Fig. 8a    Fig. 8b

3f    2c    2    2b    2    3d    3e

3d

2a

3c'

3c    1a    3d    3e    3c

eder GmbH                                        M 1110

**Fig.9a**

**Fig.9b**

**Fig. 10a**

**Fig.10b**

gfeder GmbH

M. 1118

Fig.11a          Fig.11b

Fig.12a          Fig.12b

# Fig.13

feder GmbH

M. 1118